# EUROPEAN PATENT APPLICATION

(11) **EP 4 752 844 A1**
(43) Date of publication of application: **03.06.2026**
(21) Application number: 24844399.6
(22) Date of filing: 05.06.2024
(51) Int. Cl.: G06T 19/20

(54) **METHOD AND APPARATUS FOR EDITING THREE-DIMENSIONAL MODEL**

(30) Priority: 27.07.2023 CN 202310935332
(71) Applicant: Beijing Zitiao Network Technology Co., Ltd., Beijing 100190 (CN)
(72) Inventor: WANG, Duotun, Beijing 100028 (CN); CAO, Yaping, Beijing 100028 (CN); XU, Binbin, Beijing 100028 (CN); ZHANG, Qingyuan, Beijing 100028 (CN)
(74) Representative: Marks & Clerk LLP
(86) International application number: PCT/CN2024/097621
(87) International publication number: WO 2025/020704

(57) **Abstract**

The embodiments of the present application relate to the technical field of computers. Provided are a method and apparatus for editing a three-dimensional model. The method comprises: acquiring a three-dimensional model and a model editing instruction; segmenting the three-dimensional model into at least two model components; editing, based on the model editing instruction, the at least two model components respectively to acquire target model components corresponding to the at least two model components; and combining the target model components corresponding to the at least two model components respectively to acquire a target three-dimensional model of the three-dimensional model.

## Description

### CROSS-REFERENCE TO RELATED APPLICATION(S)

This application claims priority to Chinese Application No. 202310935332.8 filed on July 27, 2023, the disclosure of which is incorporated herein by reference in its entity.

### FIELD

The present application relates to the field of computer, and in particular, to a method and an apparatus for editing three-dimensional model.

### BACKGROUND

Three-dimensional model technologies are widely applied in fields such as industrial manufacturing, live video streaming, online shopping, film and television entertainment, etc., by virtue of advantages such as low migration cost, no limitation of venue, and great reduction in operation cost of digital media related industries.

At present, three-dimensional models are mainly generated by modeling and rendering using computer graphics (Computer Graphics, CG) techniques. That is, firstly, a three-dimensional model designer builds an initial three-dimensional model, and renders the three-dimensional model through hardware such as a graphics card, so as to render the three-dimensional model. During editing of clothes, posture, style, expression, etc. of the three-dimensional model, in order to avoid the three-dimensional model designer from rebuilding the model, the prior art often deforms the built three-dimensional model to acquire the edited three-dimensional model. However, since information volume of the three-dimensional model is often very large, such manner of overall deforming the built three-dimensional model often makes it difficult to achieve an ideal editing effect of the three-dimensional model.

### SUMMARY

In view of this, embodiments of the present application provide a three-dimensional model processing method and apparatus for improving an editing effect of a three-dimensional model.

To achieve the above objective, the embodiments of the present application provide the following technical solutions.

In a first aspect, an embodiment of the present application provides a method for editing three-dimensional model. The method includes:
acquiring a three-dimensional model and a model editing instruction;
segmenting the three-dimensional model into at least two model components;
editing the at least two model components respectively based on the model editing instruction to acquire target model components corresponding to the at least two model components; and
combining the target model components corresponding to the at least two model components respectively to acquire a target three-dimensional model of the three-dimensional model.

As an optional implementation of the embodiment of the present invention, segmenting the three-dimensional model into the at least two model components includes:
acquiring component annotation information of the three-dimensional model; and
segmenting the three-dimensional model into the at least two model components based on the component annotation information of the three-dimensional model.

As an optional implementation of the embodiment of the present invention, segmenting the three-dimensional model into the at least two model components includes:
segmenting the three-dimensional model into the at least two model components based on a three-dimensional semantic segmentation algorithm.

As an optional implementation of the embodiment of the present invention, segmenting the three-dimensional model into the at least two model components includes:
segmenting the three-dimensional model into the at least two model components based on a segmentation network model,
wherein the segmentation network model is a model acquired by training a machine learning model based on a first sample dataset, and the first sample dataset includes a plurality of sample three-dimensional models and component annotation information corresponding to the plurality of sample three-dimensional models respectively.

As an optional implementation of the embodiment of the present invention, editing the at least two model components respectively based on the model editing instruction to acquire the target model components corresponding to the at least two model components includes:
determining an editing network models respectively corresponding to each of the at least two model components based on the model editing instruction, wherein the editing network models is a model acquired by training a machine learning model based on a second sample dataset, and the second sample dataset includes a plurality of sample model components and model components acquired by editing the plurality of sample model components based on the model editing instruction; and
acquiring the target model components corresponding to the at least two model components respectively based on inputting the at least two model components into the corresponding editing network models respectively.

As an optional implementation of the embodiment of the present invention, acquiring the target model components corresponding to the at least two model components respectively based on inputting the at least two model components into the corresponding editing network models respectively includes:
acquiring the target model components corresponding to the at least two model components respectively based on inputting the at least two model components into the corresponding editing network models respectively and a component material library.

As an optional implementation of the embodiment of the present invention, after segmenting the three-dimensional model into the at least two model components, the method further includes:
adding the at least two model components into the component material library.

As an optional implementation of the embodiment of the present invention, after combining the target model components corresponding to the at least two model components respectively to acquire the editing result of the three-dimensional model, the method further includes:
post-processing the target three-dimensional model based on a preset geometric processing algorithm.

As an optional implementation of the embodiment of the present invention, after combining the target model components corresponding to the at least two model components respectively to acquire the editing result of the three-dimensional model, the method further includes:
acquiring a texture map of the target three-dimensional model; and
rendering the target three-dimensional model based on the texture map to acquire a two-dimensional image corresponding to the target three-dimensional model.

In a second aspect, an embodiment of the present application provides an apparatus for editing a three-dimensional model. The apparatus includes:
an acquiring unit, configured to acquire a three-dimensional model and a model editing instruction;
a segmenting unit, configured to segment the three-dimensional model into at least two model components;
an editing unit, configured to edit the at least two model components respectively based on the model editing instruction, to acquire target model components corresponding to the at least two model components; and
a combining unit, configured to combine the target model components corresponding to the at least two model components respectively to acquire a target three-dimensional model of the three-dimensional model.

As an optional implementation of the embodiment of the present application, the segmenting unit is further configured to acquire component annotation information of the three-dimensional model, and segment the three-dimensional model into the at least two model components based on the component annotation information of the three-dimensional model.

As an optional implementation of the embodiment of the present application, the segmenting unit is further configured to segment the three-dimensional model into the at least two model components based on a three-dimensional semantic segmentation algorithm.

As an optional implementation of the embodiment of the present application, the segmenting unit is further configured to segment the three-dimensional model into the at least two model components based on a segmentation network model,
wherein the segmentation network model is a model acquired by training a machine learning model based on a first sample dataset, and the first sample dataset includes a plurality of sample three-dimensional models and component annotation information corresponding to the plurality of sample three-dimensional models respectively.

As an optional implementation of the embodiment of the present application, the editing unit is further configured to determine an editing network models corresponding to each of the at least two model components based on the model editing instruction, wherein the editing network models is a model acquired by training a machine learning model based on a second sample dataset, and the second sample dataset includes a plurality of sample model components and model components acquired by editing the plurality of sample model components based on the model editing instruction; and acquire the target model components corresponding to the at least two model components respectively based on inputting the at least two model components into the corresponding editing network models respectively.

As an optional implementation of the embodiment of the present application, the editing unit is further configured to acquire the target model components corresponding to the at least two model components respectively based on inputting the at least two model components into the corresponding editing network models and a component material library respectively.

As an optional implementation of the embodiment of the present application, the segmenting unit is further configured to add the at least two model components into the component material library after segmenting the three-dimensional model into the at least two model components.

As an optional implementation of the embodiment of the present application, the combining unit is further configured to post-process the target three-dimensional model based on a preset geometric processing algorithm after combining the target model components corresponding to the at least two model components respectively to acquire the editing result of the three-dimensional model.

As an optional implementation of the embodiment of the present application, the combining unit is further configured to acquire a texture map of the target three-dimensional model after combining the target model components corresponding to the at least two model components respectively to acquire the editing result of the three-dimensional model; and render the target three-dimensional model based on the texture map to acquire a two-dimensional image corresponding to the target three-dimensional model.

In a third aspect, an embodiment of the present application provides an electronic device. The electronic device includes a memory and a processor, the memory is configured to store a computer program, and the processor is configured to, when executing the computer program, cause the electronic device to implement the method for editing three-dimensional model according to any one of the above implementations.

In a fourth aspect, an embodiment of the present application provides a computer-readable storage medium, on which a computer program is stored, wherein the computer program, when executed by a computing device, causes the computing device to implement the method for editing three-dimensional model according to any one of the above implementations.

In a fifth aspect, an embodiment of the present application provides a computer program product, wherein the computer program product, when running on a computer, causes the computer to implement the method for editing three-dimensional model according to any one of the above implementations.

In the method for editing three-dimensional model provided by the embodiment of the present application, after acquiring a three-dimensional model and a model editing instruction, the three-dimensional model is firstly segmented into at least two model components, then the at least two model components are edited respectively based on the model editing instruction to acquire target model components corresponding to the at least two model components, and then the target model components corresponding to the at least two model components respectively are combined to acquire a target three-dimensional model of the three-dimensional model. Compared with editing a three-dimensional model as a whole in the prior art, in the method for editing three-dimensional model provided by the embodiment of the present application, when editing the three-dimensional model, the three-dimensional model is segmented into at least two model components, then the at least two model components acquired through segmenting the three-dimensional model are edited respectively, and editing results of the at least two model components are combined to acquire an edited three-dimensional model. Therefore, the embodiment of the present application can reduce information volume of an editing object, improve an editing effect of each component, and thus improve an editing effect of the three-dimensional model.

### BRIEF DESCRIPTION OF THE DRAWINGS

The drawings herein are incorporated into and constitute a part of this specification, illustrate embodiments consistent with the present application, and, together with the specification, serve to explain the principles of the present application.

In order to more clearly illustrate the technical solutions in the embodiments of the present application or in the prior art, the drawings that need to be called in the description of the embodiments or the prior art will be briefly introduced below. Apparently, for those of ordinary skills in the art, other drawings can be acquired according to these drawings without any creative effort.
FIG. 1 is a first flowchart of a method for editing three-dimensional model provided by an embodiment of the present application;
FIG. 2 is a schematic diagram of three-dimensional model segmentation provided by an embodiment of the present application;
FIG. 3 is a second flowchart of a method for editing a three-dimensional model provided by an embodiment of the present application;
FIG. 4 is a structural diagram of an apparatus for editing a three-dimensional model provided by an embodiment of the present application;
FIG. 5 is a schematic diagram of an apparatus for editing a three-dimensional model provided by an embodiment of the present application; and
FIG. 6 is a schematic diagram of hardware structure of an electronic device provided by an embodiment of the present application.

### DETAILED DESCRIPTION OF EMBODIMENTS

To more clearly understand the above objectives, features and advantages of the present application, the solutions of the present application will be further described below. It should be noted that the embodiments of the present application and features in the embodiments may be combined with each other without conflict.

Many specific details are set forth in the following description to fully understand the present application, but the present application may also be implemented in other manners different from those described herein. Apparently, the embodiments in the specification are only a part of the embodiments of the present application, but not all of them.

In the embodiments of the present application, words such as "exemplary" or "for example" are used to represent examples, illustrations or explanations. Any embodiment or design scheme described as "exemplary" or "for example" in the embodiments of the present application should not be interpreted as being more preferable or advantageous than other embodiments or design schemes. Rather, the words "exemplary" or "for example" are intended to present related concepts in a specific manner. In addition, in the description of the embodiments of the present application, the term "a plurality of" means two or more unless otherwise specified.

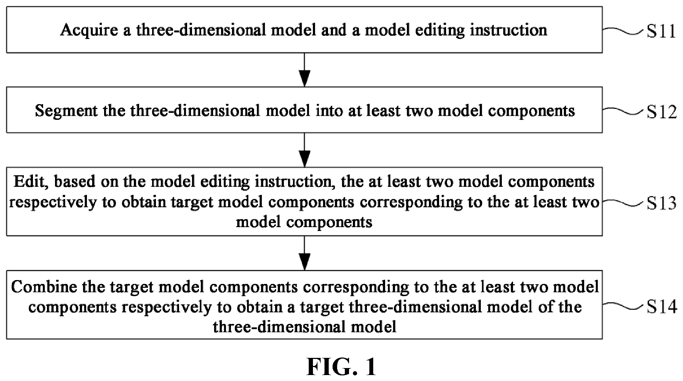

An embodiment of the present application provides a method for editing three-dimensional model. Referring to FIG. 1, the method for editing three-dimensional model includes the following steps S11 to S14.

S11, a three-dimensional model and a model editing instruction is acquired.

In some embodiments, an implementation of acquiring the three-dimensional model may include: reading the three-dimensional model from a remote server or local storage space according to a specified uniform resource identifier (Uniform Resource Identifier, URI).

The three-dimensional model in the embodiment of the present application may be a three-dimensional mesh model, a point cloud model (Point Cloud), etc., and the three-dimensional mesh model may include geometric information and attribute information of the model, such as vertex position coordinates, topology, vertex normal vector, and color.

The model editing instruction in the embodiment of the present application is used to indicate an editing operation that needs to be performed on the three-dimensional model. The model editing instruction may be a natural language instruction such as text or voice, or may be a computer language instruction such as code or script. The embodiment of the present application does not limit it, as long as the model editing instruction can indicate the editing operation that needs to be performed on the three-dimensional model.

S12, the three-dimensional model is segmented into at least two model components.

In some embodiments, an implementation of segmenting the three-dimensional model into at least two model components includes: determining a component to be edited according to the model editing instruction, and segmenting the three-dimensional model into at least two model components according to the component to be edited. For example, the three-dimensional model is a three-dimensional model of a character, and the model editing instruction instructs to edit clothes of the character, then the three-dimensional model of the character may be segmented into two model components: a clothes component and a human body component.

In some embodiments, an implementation of segmenting the three-dimensional model into at least two model components includes: segmenting the three-dimensional model into at least two model components according to a preset segmentation strategy. For example, the three-dimensional model is a three-dimensional model of a character, and the preset segmentation strategy is to segment the three-dimensional model into a head component, a torso component, a left upper limb component, a right upper limb component, a left lower limb component and a right lower limb component, then the three-dimensional model of the character may be segmented into six model components: the head component, the torso component, the left upper limb component, the right upper limb component, the left lower limb component and the right lower limb component according to the preset segmentation strategy.

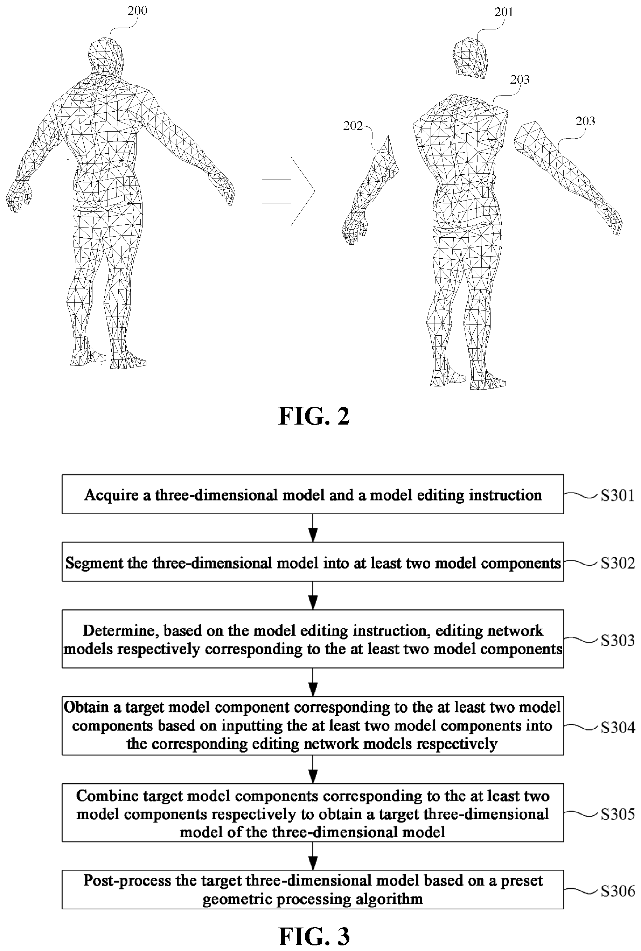

Exemplarily, referring to FIG. 2, when the three-dimensional model is a three-dimensional model of a character 200, the three-dimensional model of the character 200 may be segmented into four model components: a head component 201, a left upper limb component 202, a right upper limb component 203, and a torso component 204.

In S13, the at least two model components are edited respectively based on the model editing instruction to acquire target model components corresponding to the at least two model components.

In the embodiment of the present application, a target model component corresponding to any model component is a model component acquired by editing the model component based on the model editing instruction.

In S14, the target model components corresponding to the at least two model components respectively are combined to acquire the target three-dimensional model of the three-dimensional model.

In the method for editing a three-dimensional model provided by the embodiment of the present application, after acquiring the three-dimensional model and the model editing instruction, the three-dimensional model is firstly segmented into the at least two model components, then the at least two model components are edited respectively based on the model editing instruction to acquire the target model components corresponding to the at least two model components, and then the target model components corresponding to the at least two model components respectively are combined to acquire the target three-dimensional model of the three-dimensional model. Compared with editing the three-dimensional model as a whole in the prior art, in the method for editing a three-dimensional model provided by the embodiment of the present application, when editing the three-dimensional model, the three-dimensional model is segmented into the at least two model components, then the at least two model components acquired through segmenting the three-dimensional model are edited respectively, and editing results of the at least two model components are combined to acquire the edited three-dimensional model. Therefore, the embodiment of the present application can reduce information volume of the editing object, improve the editing effect of each component, and thus improve the editing effect of the three-dimensional model.

As an expansion and refinement of the above embodiments, an embodiment of the present application provides another method for editing three-dimensional model. Referring to FIG. 3, the method for editing three-dimensional model includes the following steps.

S301, a three-dimensional model and a model editing instruction is acquired.

In some embodiments, an implementation of acquiring the three-dimensional model and the model editing instruction is: displaying a model editing interface to a user through a model editing application, and determining the three-dimensional model and the model editing instruction according to an operation of the user in the model editing interface.

S302, the three-dimensional model is segmented into at least two model components.

In some embodiments, the implementation of the above step S302 (segmenting the three-dimensional model into at least two model components) includes the following step a and step b.

Step a, component annotation information of the three-dimensional model is acquired.

Step b, the three-dimensional model is segmented into at least two model components based on the component annotation information of the three-dimensional model.

That is, when the three-dimensional model is generated, the three-dimensional model is subjected to semantic segmentation annotation, and the three-dimensional model is segmented into model components according to the annotation information.

In some embodiments, the implementation of the above step S302 (segmenting the three-dimensional model into at least two model components) includes: segmenting the three-dimensional model into at least two model components based on a three-dimensional semantic segmentation algorithm.

Exemplarily, the three-dimensional semantic segmentation algorithm may be a projection-based three-dimensional semantic segmentation algorithm. That is, firstly, the three-dimensional model is projected into multiple two-dimensional images from multiple angles, then the multiple two-dimensional images acquired through projection are subjected to semantic segmentation, and the three-dimensional model is segmented according to semantic segmentation results of the multiple two-dimensional images.

In some embodiments, the implementation of the above step S302 (segmenting the three-dimensional model into at least two model components) includes: segmenting the three-dimensional model into at least two model components based on a segmentation network model.

The segmentation network model is a model acquired by training a machine learning model based on a first sample dataset, and the first sample dataset includes a plurality of sample three-dimensional models and component annotation information corresponding to the plurality of sample three-dimensional models respectively.

Exemplarily, the machine learning model may be a deep neural network (Deep Neural Networks, DNN), a convolutional neural network (Convolutional Neural Networks, CNN), etc.

In some embodiments, a training process of the segmentation network model may include: inputting a sample three-dimensional model into a to-be-trained segmentation network model, and acquiring a semantic segmentation result of the sample three-dimensional model output by the to-be-trained segmentation network model; calculating a loss value according to the semantic segmentation result of the sample three-dimensional model, component annotation information corresponding to the sample three-dimensional model, and a preset loss function; and adjusting a model parameter of the to-be-trained segmentation network model according to the loss value.

In S303, an editing network models corresponding to each of the at least two model components is determined according to the model editing instruction.

The editing network models is a model acquired by training a machine learning model based on a second sample dataset, and the second sample dataset includes a plurality of sample model components and model components acquired by editing the plurality of sample model components based on the model editing instruction.

For example, two style transfer network models are pre-trained for a face component, a first style transfer network model is used to convert the face component into a cartoon style, and a second style transfer network model is used to convert the face component into an oil painting style. When the model editing instruction instructs to convert the three-dimensional model into the cartoon style, the first style transfer network model is determined as the editing network models corresponding to the face component.

S304: target model components corresponding to the at least two model components is acquired respectively based on inputting the at least two model components into the corresponding editing network models respectively.

That is, the model components are input into the corresponding editing network models, and outputs of the editing network models are taken as the target model components corresponding to the model components.

In some embodiments, the operation of acquiring the target model components corresponding to the at least two model components respectively based on inputting the at least two model components into the corresponding editing network models respectively includes:
acquiring the target model components corresponding to the at least two model components respectively based on inputting the at least two model components into the corresponding editing network models respectively and a component material library.

For example, when a face model component is being edited, a glasses model component needs to be added to the face component, then a matching glasses model component may be acquired from the component material library firstly, and then the face component wearing glasses is acquired according to the glasses model component, the face model component and the editing network models corresponding to the face model component.

S305, the target model components corresponding to the at least two model components respectively are combined to acquire the target three-dimensional model of the three-dimensional model.

That is, the edited model components (the target model components corresponding to the at least two model components respectively) are re-spliced to acquire the edited three-dimensional model (the target three-dimensional model).

S306, the target three-dimensional model is post-processed based on a preset geometric processing algorithm.

Since the target three-dimensional model acquired by combining the target model components corresponding to the at least two model components may have problems such as clipping, holes, abnormal deformation, missing meshes at component connections, burrs, etc., the embodiment of the present application will introduce a post-processing graphic geometric processing algorithm to ensure the rationality and driving capability of the target three-dimensional model generation after combining the target model components corresponding to the at least two model components to acquire the target three-dimensional model.

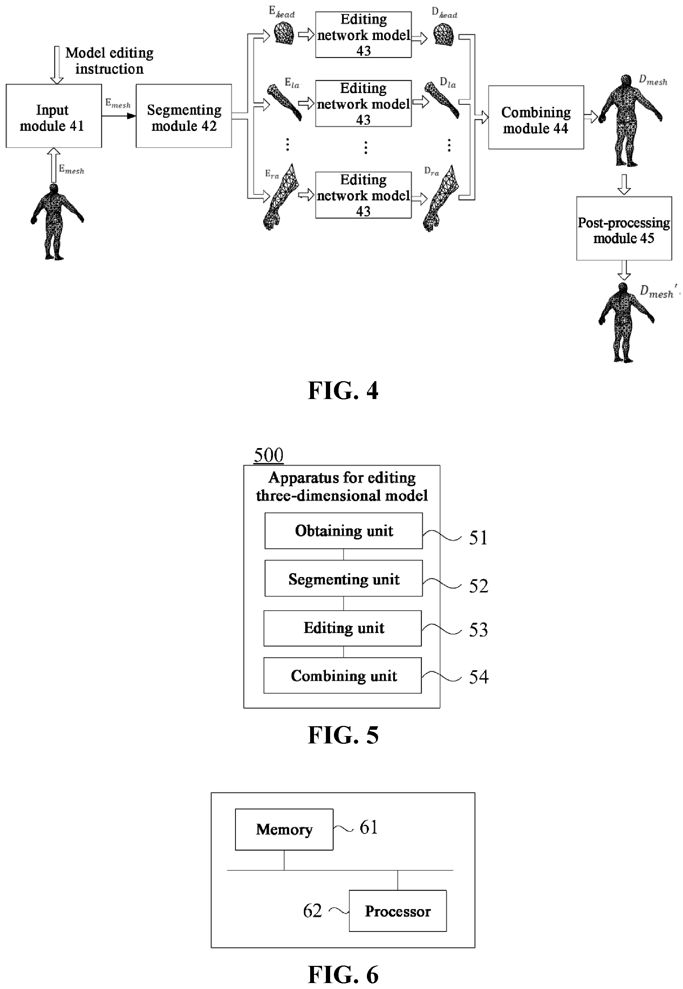

Referring to FIG. 4, in some embodiments, an apparatus for editing three-dimensional model for implementing the method for editing three-dimensional model of the embodiment shown in FIG. 3 includes: an input module 41, a segmentation module 42, a plurality of editing network models 43, a combining module 44, and a post-processing module 45. The input module 41 is configured to acquire a three-dimensional model Eₘₑₛₕ and a model editing instruction, the segmentation module 42 is configured to segment the three-dimensional model into multiple model components (E_{head}, Eₗₐ, Eᵣₐ...), the plurality of editing network models 43 are configured to edit one model component respectively to acquire an edited model component (D_{head}, Dₗₐ, Dᵣₐ...), the combining module 44 is configured to combine the edited model components into the edited three-dimensional model Dₘₑₛₕ, and the post-processing module 45 is configured to post-process the target three-dimensional model based on a geometric processing algorithm to acquire the processed three-dimensional model Dₘₑₛₕ'.

In some embodiments, after combining the target model components corresponding to the at least two model components respectively to acquire the editing result of the three-dimensional model, the method for editing three-dimensional model provided by the embodiment of the present application further includes: acquiring a texture map of the target three-dimensional model; and rendering the target three-dimensional model based on the texture map to acquire a two-dimensional image corresponding to the target three-dimensional model.

In some embodiments, an implementation of acquiring the texture map of the target three-dimensional model may include: acquiring an image specified by a user as the texture map of the target three-dimensional model.

In other embodiments, an implementation of acquiring the texture map of the target three-dimensional model may include: deforming and aligning the texture map of the three-dimensional model based on a difference between the three-dimensional model and the target three-dimensional model to acquire the texture map of the target three-dimensional model.

Based on the same inventive concept, as an implementation of the above method, an embodiment of the present application further provides an apparatus for editing three-dimensional model. This embodiment corresponds to the above method embodiments. For ease of reading, the details in the above method embodiments will not be repeated in this embodiment, but it should be clear that the apparatus for editing three-dimensional model in this embodiment can correspondingly implement all the content in the above method embodiments.

An embodiment of the present application provides an apparatus for editing three-dimensional model. FIG. 5 is a structural diagram of the apparatus for editing three-dimensional model. As shown in FIG. 5, the apparatus for editing three-dimensional model 500 includes:
an acquiring unit 51, configured to acquire a three-dimensional model and a model editing instruction;
a segmenting unit 52, configured to segment the three-dimensional model into at least two model components;
an editing unit 53, configured to edit the at least two model components respectively based on the model editing instruction to acquire target model components corresponding to the at least two model components; and
a combining unit 54, configured to combine the target model components corresponding to the at least two model components respectively to acquire a target three-dimensional model of the three-dimensional model.

As an optional implementation of the embodiment of the present application, the segmenting unit 52 is further configured to acquire component annotation information of the three-dimensional model, and segment the three-dimensional model into at least two model components based on the component annotation information of the three-dimensional model.

As an optional implementation of the embodiment of the present application, the segmenting unit 52 is further configured to segment the three-dimensional model into the at least two model components based on a three-dimensional semantic segmentation algorithm.

As an optional implementation of the embodiment of the present application, the segmenting unit 52 is further configured to segment the three-dimensional model into the at least two model components based on a segmentation network model,
wherein the segmentation network model is a model acquired by training a machine learning model based on a first sample dataset, and the first sample dataset includes a plurality of sample three-dimensional models and component annotation information corresponding to the plurality of sample three-dimensional models respectively.

As an optional implementation of the embodiment of the present application, the editing unit 53 is further configured to determine an editing network models corresponding to each of the at least two model components based on the model editing instruction, wherein the editing network models is a model acquired by training a machine learning model based on a second sample dataset, and the second sample dataset includes a plurality of sample model components and model components acquired by editing the plurality of sample model components based on the model editing instruction; and acquire the target model components corresponding to the at least two model components respectively based on inputting the at least two model components into the corresponding editing network models respectively.

As an optional implementation of the embodiment of the present application, the editing unit 53 is further configured to acquire the target model components corresponding to the at least two model components respectively based on inputting the at least two model components into the corresponding editing network models and a component material library respectively.

As an optional implementation of the embodiment of the present application, the segmenting unit 52 is further configured to add the at least two model components into the component material library after segmenting the three-dimensional model into the at least two model components.

As an optional implementation of the embodiment of the present application, the combining unit 54 is further configured to post-process the target three-dimensional model based on a preset geometric processing algorithm after combining the target model components corresponding to the at least two model components respectively to acquire the editing result of the three-dimensional model.

As an optional implementation of the embodiment of the present application, the combining unit 54 is further configured to acquire a texture map of the target three-dimensional model after combining the target model components corresponding to the at least two model components respectively to acquire the editing result of the three-dimensional model; and render the target three-dimensional model based on the texture map to acquire a two-dimensional image corresponding to the target three-dimensional model.

The apparatus for editing three-dimensional model provided by this embodiment can perform the method for editing three-dimensional model provided by the above method embodiments, and the implementation principles and technical effects thereof are similar, which will not be repeated here.

Based on the same inventive concept, an embodiment of the present application further provides an electronic device. FIG. 6 is a schematic diagram of a structure of an electronic device provided by an embodiment of the present application. As shown in FIG. 6, the electronic device provided by this embodiment includes a memory 61 and a processor 62, the memory 61 is configured to store a computer program, and the processor 62 is configured to, when executing the computer program, perform the method for editing three-dimensional model provided by the above embodiments.

Based on the same inventive concept, an embodiment of the present application further provides a computer-readable storage medium, on which a computer program is stored, wherein the computer program, when executed by a processor, causes a computing device to implement the method for editing three-dimensional model provided by the above embodiments.

Based on the same inventive concept, an embodiment of the present application further provides a computer program product, wherein the computer program product, when running on a computer, causes a computing device to implement the method for editing three-dimensional model provided by the above embodiments.

Those skilled in the art should understand that the embodiments of the present application may be provided as a method, a system, or a computer program product. Therefore, the present application may take the form of a complete hardware embodiment, a complete software embodiment, or an embodiment combining software and hardware. Moreover, the present application may take the form of a computer program product implemented on one or more computer-readable storage media including computer-usable program codes.

The processor may be a central processing unit (CPU), or may be other general-purpose processors, digital signal processors (DSPs), application specific integrated circuits (ASICs), field programmable gate arrays (FPGAs) or other programmable logic devices, discrete gates or transistor logic devices, discrete hardware model components, etc. The general-purpose processor may be a microprocessor, or the processor may also be any conventional processor or the like.

The memory may include non-permanent memory in a computer-readable medium, random access memory (RAM) and/or non-volatile memory, such as read-only memory (ROM) or flash RAM. The memory is an example of a computer-readable medium.

Computer-readable media include both permanent and non-permanent, removable and non-removable storage media. Information may be stored by any method or technology in a storage medium, and the information may be computer-readable instructions, data structures, program modules or other data. Examples of computer storage media include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disc read-only memory (CD-ROM), digital versatile disc (DVD) or other optical storage, magnetic cassette, magnetic disk storage or other magnetic storage devices, or any other non-transmission medium that can be used to store information accessible by the computing device. According to the definition herein, computer-readable media do not include transitory computer-readable media (transitory media), such as modulated data signals and carrier waves.

Finally, it should be noted that the above embodiments are only intended to illustrate the technical solutions of the present application, but not to limit them. Although the present application has been described in detail with reference to the foregoing embodiments, those of ordinary skill in the art should understand that they can still make modifications to the technical solutions recorded in the foregoing embodiments, or make equivalent replacements for some or all of the technical features. However, these modifications or replacements do not make the essence of the corresponding technical solutions deviate from the scope of the technical solutions of the embodiments of the present application.

## Claims

1. A method for editing a three-dimensional model, comprising:
acquiring a three-dimensional model and a model editing instruction;
segmenting the three-dimensional model into at least two model components;
editing, based on the model editing instruction, the at least two model components respectively to acquire target model components corresponding to the at least two model components; and
combining the target model components corresponding to the at least two model components respectively to acquire a target three-dimensional model of the three-dimensional model.

2. The method according to claim 1, wherein segmenting the three-dimensional model into the at least two model components comprises:
acquiring component annotation information of the three-dimensional model; and
segmenting the three-dimensional model into the at least two model components based on the component annotation information of the three-dimensional model.

3. The method according to claim 1, wherein segmenting the three-dimensional model into the at least two model components comprises:
segmenting the three-dimensional model into the at least two model components based on a three-dimensional semantic segmentation algorithm.

4. The method according to claim 1, wherein segmenting the three-dimensional model into the at least two model components comprises:
segmenting the three-dimensional model into the at least two model components based on a segmentation network model,
wherein the segmentation network model is a model acquired by training a machine learning model based on a first sample dataset, and the first sample dataset comprises a plurality of sample three-dimensional models and component annotation information corresponding to the plurality of sample three-dimensional models respectively.

5. The method according to claim 1, wherein editing the at least two model components respectively based on the model editing instruction to acquire the target model components corresponding to the at least two model components comprises:
determining, based on the model editing instruction, editing network models respectively corresponding to the at least two model components, wherein the editing network models are models acquired by training a machine learning model based on a second sample dataset, and the second sample dataset comprises a plurality of sample model components and model components acquired by editing the plurality of sample model components based on the model editing instruction; and
acquiring the target model components corresponding to the at least two model components respectively based on inputting the at least two model components into the corresponding editing network models respectively.

6. The method according to claim 5, wherein acquiring the target model components corresponding to the at least two model components respectively based on inputting the at least two model components into the corresponding editing network models respectively comprises:
acquiring the target model components corresponding to the at least two model components respectively based on inputting the at least two model components into the corresponding editing network models respectively and a component material library.

7. The method according to claim 6, wherein after segmenting the three-dimensional model into the at least two model components, the method further comprises:
adding the at least two model components into the component material library.

8. The method according to any of claims 1 to 7, wherein after combining the target model components corresponding to the at least two model components respectively to acquire the editing result of the three-dimensional model, the method further comprises:
post-processing the target three-dimensional model based on a preset geometric processing algorithm.

9. The method according to any of claims 1 to 7, wherein after combining the target model components corresponding to the at least two model components respectively to acquire the editing result of the three-dimensional model, the method further comprises:
acquiring a texture map of the target three-dimensional model; and
rendering the target three-dimensional model based on the texture map to acquire a two-dimensional image corresponding to the target three-dimensional model.

10. An apparatus for editing a three-dimensional model, comprising:
an acquiring unit, configured to acquire a three-dimensional model and a model editing instruction;
a segmenting unit, configured to segment the three-dimensional model into at least two model components;
an editing unit, configured to edit the at least two model components respectively based on the model editing instruction, to acquire target model components corresponding to the at least two model components; and
a combining unit, configured to combine the target model components corresponding to the at least two model components respectively to acquire a target three-dimensional model of the three-dimensional model.

11. An electronic device, comprising: a memory and a processor, wherein the memory is configured to store a computer program, and the processor is configured to, when executing the computer program, cause the electronic device to implement the method for editing three-dimensional model according to any of claims 1 to 9.

12. A computer-readable storage medium, wherein a computer program is stored on the computer-readable storage medium, and the computer program, when executed by a computing device, causes the computing device to implement the method for editing three-dimensional model according to any of claims 1 to 9.
